# EUROPÄISCHE PATENTSCHRIFT

(11) **EP 2 163 159 B1**
(45) Veröffentlichungstag und Bekanntmachung des Hinweises auf die Patenterteilung: **07.05.2014**
(21) Anmeldenummer: 09405143.0
(22) Anmeldetag: 25.08.2009
(51) Int. Cl.: A23J 1/14, C11B 1/06, C11B 3/04, C11B 3/00, C11C 3/04, A23L 1/305, A23K 1/16, C10L 5/44, C11B 13/00, C10L 5/36, C10L 1/02

(54) **Verfahren zur Verwertung von Ölpflanzen**
Method for exploiting oil plants
Procédé d'utilisation d'oléagineux

(30) Priorität: 16.09.2008 CH 14772008
(43) Veröffentlichungstag der Anmeldung: 17.03.2010
(73) Patentinhaber: Fraunhofer-Gesellschaft zur Förderung der angewandten Forschung e.V., 80686 München (DE)
(72) Erfinder: Schwaller, Jürg, 6018 Buttisholz (CH); Bernath, Etienne, 8803 Rüschlikon (CH)
(74) Vertreter: AMMANN PATENTANWÄLTE AG BERN

(56) Entgegenhaltungen:
- EP-A- 1 950 273
- DE-A1- 10 245 316
- GB-A- 2 433 073
- US-A- 6 005 076
- US-A1- 2005 136 162
- KARAOSMANOGLU F: "BIOBRIQUETTING OF RAPESEED CAKE" ENERGY SOURCES, LONDON, GB, Bd. 22, Nr. 3, 1. Januar 2000 (2000-01-01), Seiten 257-267, XP009048051

## Beschreibung

Die vorliegende Erfindung bezieht sich auf ein Verfahren zur Verwertung von Ölpflanzen, aus welchen Öl gewonnen wird, und eine Gesamtanlage zum Durchführen eines derartigen Verfahrens.

Aus Ölpflanzen lassen sich vielfältige Produkte herstellen. Jedoch wurde bis anhin der Fokus jeweils auf die Gewinnung des einzelnen Produktes gelegt, während die restlichen, bei der Gewinnung anfallenden Pflanzeninhaltsstoffe als Abfall betrachtet und daher unzureichend einer Weiterverwertung zugeführt wurden. Dadurch resultiert eine für das hergestellte Produkt ungünstige Ökobilanz. Als Beispiel sei die Herstellung von Biokraftstoff genannt, bei welcher die restlichen Pflanzeninhaltsstoffe grösstenteils unverwertet bleiben. In der US 2005/0136162 A1 ist ein Verfahren beschrieben, das zur Fraktionierung von Presskuchen und Mehlen dient. In der GB 2 433 073 A geht es um die Verbrennung des bei der Ölgewinnung anfallenden Presskuchens.Im Artikel "Biobriquetting of Rapeseed Cake", Energy Sources, 22: 257-267, 2000 ist die Brikettierung von Rapspresskuchen erwähnt zum Erhalt von Brennstoff.

Es ist Aufgabe der vorliegenden Erfindung, ein Verfahren der eingangs erwähnten Art anzugeben, welches eine verbesserte Verwertung der Ölpflanzen aufweist.

Ein Verfahren, das diese Aufgabe löst, ist im Anspruch 1 angegeben. Die weiteren Ansprüche geben bevorzugte Ausführungen des Verfahrens sowie eine Gesamtanlage zum Durchführen des Verfahrens an.

Die Erfindung basiert auf der Erkenntnis, dass die Pflanzinhaltsstoffe, welche bei der Ölgewinnung anfallen, ein wertvolles Nebenprodukt darstellen. Durch Nutzung der darin enthaltenen Proteine sowie des Energieinhalts kann die Verwertung verbessert und die Wertschöpfung erhöht werden.

Die Erfindung wird nachfolgend anhand eines Ausführungsbeispiels erläutert, wobei

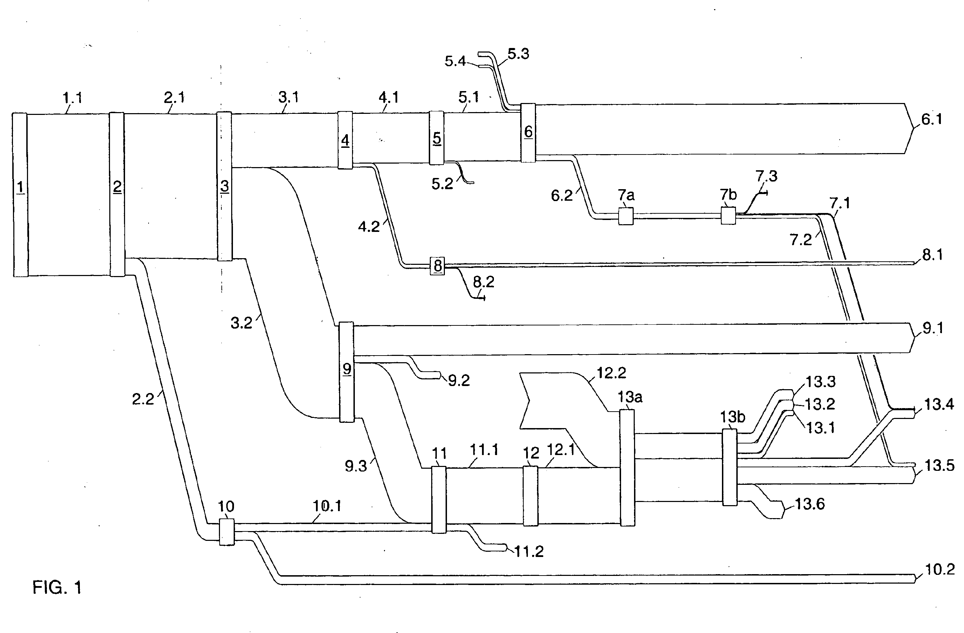

Fig. 1 in Form eines Sankey-Diagramms eine schematische Darstellung der Massen- bzw. Energieströme des erfindungsgemässen Verfahrens zeigt.

Die einzelnen Verfahrensschritte sind in Fig. 1 jeweils durch ein Rechteck 1, 2, 3, etc. gekennzeichnet. Der oder die links von einem jeweiligen Rechteck 1, 2, 3, etc. eingehenden Ströme sind die für den jeweiligen Verfahrensschritt benötigten Güter und werden im Folgenden als "Input" bezeichnet. Der oder die rechts von einem Rechteck abgehenden Ströme sind die aus dem jeweiligen Verfahrensschritt erzeugten Produkte und werden im Folgenden als "Output" bezeichnet.

Als Beispiel wird das Verfahren nachfolgend anhand der Verarbeitung von Raps eingehender erläutert.

### Verfahrensschritt 1: Beschaffung der Rapssaat

Input: Rapssaat
Output 1.1: Rapssaat

Am Anfang der Prozesskette steht die Beschaffung der Rapssaat. Bei der Ernte des Rapses wird die Rapssaat vom Rapsstroh getrennt. Dieses verbleibt zum Erhalt des Humuskörpers und der Bodenfruchtbarkeit auf dem Feld, während die Rapssaat mit geeigneten Transportmitteln zur Verarbeitungsanlage gebracht wird. Es kann dort ein Zwischenlager vorgesehen sein, um die Produktion bei Lieferengpässen zu überbrücken. Für die Gewährleistung eines einwandfreien Rohstoffs wird die Rapssaat einer Qualitätskontrolle unterzogen. Dazu werden regelmässig Stichproben entnommen und im Labor analysiert. Dabei wird die Rapssaat z.B. auf das Vorhandensein von Störstoffen hin untersucht.

### Verfahrensschritt 2: Schälen der Rapssaat

Input 1.1: Rapssaat
Output 2.1: Saatkörper
Output 2.2: Schalen

Die Rapssaat wird durch thermische Behandlung mit Dampf vorkonditioniert und in einem Schälprozess in Rapsschale und den eigentlichen Saatkörper ("Fruchtfleisch") getrennt. Die vorbehandelte Rapssaat wird dabei in speziellen Walzenstühlen gequetscht, wobei sich Schalen und Saatkörper voneinander trennen ("Dehulling"). Der Gewichtsanteil der Schale an der Rapssaat beträgt etwa 10-12 %, bei neueren Sorten sogar weniger als 10 %.

### Verfahrensschritt 3: Pressen der Rapssaat

Input 2.1: Saatkörper
Output 3.1: Pflanzenöl roh
Output 3.2: Rapspresskuchen ("RPK")

Der separierte Saatkörper wird einer Pressanlage z.B. in Form von hydraulischen, selbstaustragenden Kammerfilterpressen zugeführt. Zur Befüllung der Pressen wird die Mischung aus Saatkörper und rohem Öl mittels Pumpen in die Presskammern gebracht, das Öl rezirkuliert und der Flüssigkeitsüberschuss abgeführt.

### Verfahrensschritt 4: "Degumming"

Input 3.1: Pflanzenöl roh
Output 4.1: Raffinat feucht
Output 4.2: Schleimstoffe

Als "Degumming" wird die Vorraffination bezeichnet, bei welcher das rohe Pflanzenöl entschleimt bzw. entwachst wird. Hierzu wird inline Säure zudosiert und in einem Mischer dispergiert. Im anschliessenden Reaktionstank agglomerieren die nichthydratisierbaren Phospholipide. Anschliessend erfolgt eine Laugendosierung und Dispergierung in einem dynamischen Mischer.

In einem nachfolgenden Rührbehälter wird der "Soapstock" gebildet, wobei auch Metallverbindungen und andere Verunreinigungen agglomeriert werden. Ein Intensivrührwerk verhindert das Absetzen der schweren Phase im Reaktionsbehälter. Im Separator wird der "Soapstock" abgetrennt, im Soapstockbehälter gepuffert und anschliessend mittels einer Pumpe zur Presskuchenbearbeitung gefördert.

Als nächster Verfahrensschritt erfolgt das Auswaschen der im Öl enthaltenen Restseifen mit heissem Wasser. Hierzu wird Waschwasser über einen dynamischen Mischer zugefügt. Im Separator wird das Waschwasser bis zu einer verbleibenden Restfeuchte vom Öl getrennt.

### Verfahrensschritt 5: Trocknung

Input 4.1: Raffinat feucht
Output 5.1: Raffinat trocken
Output 5.2: Wasser

Die weitere Reduzierung der Restfeuchte erfolgt in einem Trockner unter Vakuum, das in einer Vakuumanlage erzeugt wird. Dabei verdampft der Wasseranteil im Pflanzenöl. Aufgrund des unterschiedlichen Siedeverhaltens der Komponenten Öl und Wasser können die Stoffe separiert werden. Typischerweise beträgt die Restfeuchte weniger als 0.2 %. Mit einer Pumpe gelangt das neutralisierte Öl zur Umesterung oder gegebenenfalls zu einer Zwischenlagerung nach einer Abkühlung mittels Plattenwärmetauscher.

### Verfahrensschritt 6: Veresterung

Input 5.1: Raffinat trocken
Input 5.3: fossiles Methanol
Input 5.4: weitere Edukte
Output 6.1: Biodiesel in Form von Rapsmethylester (RME)
Output 6.2: Rohglycerin

Zur Herstellung des Biokraftstoffs ("Biodiesel") wird das Pflanzenöl in Form des getrockneten Raffinats mit ca. 10 % fossilem Methanol versetzt. Es ist auch denkbar, Methanol aus nicht-fossilen Quellen wie Tiermehl oder Holz zu verwenden.

Bei Temperaturen um 60 Grad Celsius werden die Esterbindungen des Pflanzenöls in Anwesenheit eines Katalysators (Natriummethylat u.a.) getrennt und die entstehenden Fettsäuren mit dem Methanol verestert (Umesterung). Das entstehende Rohglycerin wird anschliessend vom Biodiesel getrennt, indem der Dichteunterschied ausgenutzt wird.

### Verfahrensschritt 7a, 7b: Verbrennung und thermische Verwertung des Rohglycerin

Input 6.2: Rohglycerin
Output 7.1: Strom
Output 7.2: Wärme
Output 7.3: Verluste

Beim Verfahrensschritt 7a wird das Rohglycerin in einem Rotationszerstäuber verbrannt. Der Brennstoffnutzungsgrad liegt dabei im Bereich von 90 %. Der mittlere Heizwert von Rohglycerin liegt bei rund 5'500 kwh/t.

Die produzierte thermische Energie wird anschliessend beim Verfahrensschritt 7b in einer WKK-Anlage (Wärme-Kraft-Kopplungsanlage) genutzt, mittels welcher Strom sowie Wärme erzeugbar sind, die z.B. zur Gebäudeheizung und/oder für industrielle Zwecke nutzbar ist. Als WKK-Anlage ist z.B. eine auf Basis des ORC ("Organic Rankine Cycle") basierende Anlage geeignet. Der Gesamtnutzungsgrad liegt im Bereich von 84 %, der Brutto-Stromnutzungsgrad im Bereich von 17 %.

### Verfahrensschritt 8: Chemische und/oder physikalische Verfahren zur Werkstoffgewinnung

Input 4.2: Schleimstoffe
Output 8.1: Fettsäuren, Aminosäuren, Lecithin, etc.
Output 8.2: Reststoffe

Durch Extraktions- und Trennverfahren können aus den Schleimstoffen verschiedene hochwertige Produkte (Fettsäuren, Lecithin, Lysin, Methionin/Cystin, Threonin/Tryptophan) gewonnen werden. Abnehmer dieser Produkte sind z.B. die Nahrungsmittel- oder Pharmaindustrie.

### Verfahrensschritt 9: Entproteinisierung

Input 3.2: Rapspresskuchen
Output 9.1: Proteinisolat
Output 9.2: Reststoffe
Output 9.3: Rapspresskuchen entproteinisiert

Aus dem Rapspresskuchen werden Proteinisolate gewonnen. Als Verfahren eignet sich z.B. jenes wie in der US 5,844,086 und US 6,005,076 beschrieben (vgl. auch WO 2007/033481 Al). Durch die Anwendung der Hochdruckmembran-/Reversosmose-Technologie können die gewünschten Proteinmoleküle aus dem in der Sole aufgeschlämmten Rapspresskuchen isoliert werden. Als Hochdruckmembran wird z.B. ein Cross-flow-Keramikmodul verwendet. Die beim Verfahren erzeugte Trockensubstanz (Isolat) kann bis zu 90 Prozent Protein enthalten.

Bei den gewonnenen Proteinen handelt es sich um Supertein und Puratein, die in Speisen ähnliche Eigenschaften wie Hühnereiweiss aufweisen.

Das Verfahren führt im Gegensatz zu den herkömmlichen Proteingewinnungsverfahren zu besonders reinen Produkten, welche nicht nur im Futtermittelsektor, sondern auch in der Humanernährung verwendet werden können. So haben die aus dem Rapspresskuchen gewonnenen Proteine aufgrund ihrer anerkannten probiotischen Eigenschaften ein sehr hohes Wertschöpfungspotential in der Humanernährung und können anstelle oder ergänzend zu Sojaproteinen u.a. als Nahrungsmittelzusätze, in Fertiggerichten und/oder Lifestyleprodukten eingesetzt werden. Eine derartige Verwendung der Proteine findet insbesondere dann eine sehr hohe Akzeptanz auf dem globalen Markt, wenn sie aus gentechnisch unverändertem Raps gewonnen werden.

Anstelle des Verfahrens zur Gewinnung von Proteinisolaten, bei welchem durch Wahl eines alkalischen pH-Werts (pH 8-10) der grösste Teil der Proteine in Lösung geht und diese durch eine gezielte Absenkung des pH-Wertes (auf pH 4,5) anschliessend ausfallen, ist es auch möglich, das Milieu der wässrigen Lösung so zu wählen, dass nicht die Proteine, sondern andere Stoffe in Lösung gehen, um sie anschliessend von den Proteinen zu trennen. Das so gewonnene Konzentrat kann nach dem Trocknen einen Proteingehalt von bis zu 70 Prozent enthalten.

Es wurde festgestellt, dass bei einer zumindest teilweisen Entfernung der Rapsschalen (vgl. Verfahrensschritt 2) der Prozess der Entproteinisierung effizienter gestaltbar ist und Proteine von besonders hoher Qualität gewonnen werden können.

Ist beim Prozess des Schälens und des Pressens (vgl. Verfahrensschritte 2 und 3) gewährleistet, dass die Temperatur der Saatkörper nicht einen Maximalwert überschreitet, kann einer Detanurierung der Proteine vorgebeugt und somit beim Verfahrensschritt 9 eine besonders hohe Proteinausbeute erzielt werden. Der Maximalwert der Temperatur liegt z.B. bei 100 Grad Celsius, vorzugsweise bei 80 Grad Celsius und besonders bevorzugt bei 65 Grad Celsius. Gegebenenfalls ist beim Verfahrensschritt 2 und/oder Verfahrensschritt 3 eine Kühlung vorgesehen, mittels welcher die Wärme so abführbar ist, dass die Temperatur unterhalb des Maximalwerts bleibt.

### Verfahrensschritt 10: Pressen der Rapsschalen

Input 2.2: Schalen
Output 10.1: Schalen entölt
Output 10.2: Schalenöl

Der Restölgehalt der Schalen beträgt je nach dem im Verfahrensschritt 2 angewendeten Schälverfahren bis 10 % der Trockensubstanz. Das Öl wird z.B. mittels eines Schneckenspindel-Verfahrens aus den Schalen gepresst.

Das dabei gewonnene Öl ist aufgrund seiner Molekularstruktur höherwertig und bildet einen Biokraftstoff, der für einen direkten Einsatz in Verbrennungsmotoren geeignet ist.

### Verfahrensschritt 11: Pelletierung

Input 9.3: Rapspresskuchen entproteinisiert
Input 10.1: Schalen entölt
Output 11.1: Rapspresskuchen-Pellets
Output 11.2: Wasser

Der beim Pressvorgang anfallende und entproteinisierte Presskuchen wird kontinuierlich einer Pelletieranlage zugeführt. Der Presskuchen wird auf einem Bandtrockner getrocknet, bis der Wassergehalt genügend tief ist (typischerweise weniger als 9 %).

Nach der Konditionierung gelangt der Presskuchen in eine Pelletpresse, wo er mittels rotierender Koller mit hohem Druck durch eine Matrize gedrückt wird. Hierbei entstehen zylindrische Körper, welche z.B. einen Durchmesser von etwa 8 mm und eine Länge von etwa 10 - 20 mm aufweisen. Anstelle von Pellets kann der Presskuchen auch zu anderen Arten von Presskörpern verdichtet werden, die einer energetischen Verwertung zuführbar sind.

Die heissen Pellets werden anschliessend in einem Kühler von etwa 100 Grad Celsius auf Umgebungstemperatur gekühlt und gelangen dann über Förderelemente in ein Lagersilo. Aufgrund der geringen Restfeuchte ist ein nahezu unbegrenzte Lagerbarkeit der Pellets gewährleistet.

### Verfahrensschritt 12: Logistik

Input 11.1: Rapspresskuchen-Pellets ("RPK- Pellets")
Output 12.1: Rapspresskuchen-Pellets

Aus dem Lager erfolgt bei Bedarf die Verladung und der Transport der RPK-Pellets zu der oder den Anlagen zur energetischen Verwertung. Diese können sich in der Nähe des Lagers oder auch weiter entfernt davon befinden.

### Verfahrensschritt 13a, 13b: Verbrennung und thermische Verwertung

Input 12.1: Rapspresskuchen-Pellets
Input 12.2: Holz
Output 13.1 und 13.4: Strom
Output 13.2 und 13.5: Wärme
Output 13.3 und 13.6: Verluste

Die Verwertung der RPK-Pellets erfolgt in einem oder mehreren Heizkraftwerken in Form von WKK-Anlagen.

Die RPK-Pellets weisen einen hohen Heizwert auf, der im Mittel bei etwa 5 MWh/t liegt. Ihr Ascheschmelzpunkt ist jedoch relativ tief. Um diesen zu erhöhen, können die Pellets z.B. zusammen mit Holz, wie beispielsweise Waldholz verbrannt (Verfahrensschritt 13a in Fig. 1) werden. Das Holz weist typischerweise einen Wassergehalt auf, der im Bereich von 40 % liegt, sowie einen Heizwert im Bereich von 3 MWh/t. Zur Verbrennung 13a dient eine stationäre Feuerung, welche einen Nutzungsgrad von etwa 85 % aufweist.

Die aus der Verbrennung gewonnene thermische Energie wird mittels Dampfturbinen in Strom und nutzbare Wärme umgewandelt (Verfahrensschritt 13b in Fig. 1). Der elektrische Nutzungsgrad der WKK-Anlagen beträgt etwa 20 %, der Gesamtnutzungsgrad etwa 60 %.

Aufgrund der Abtrennung der Proteine im Verfahrensschritt 9 wird der Stickstoff aus den Pflanzeninhaltsstoffen entzogen, um so einen hinsichtlich Emissionen idealen Brennstoff bereitstellen zu können.

Anstelle von Holz ist es auch möglich, andere erneuerbare Biomasse den Pellets beizugeben, um sie thermisch zu verwerten. Je nach Auslegung der Anlage ist es auch denkbar, die zusätzliche Beigabe von Biomasse zu minimieren oder ganz wegzulassen.

Mittels des oben beschriebenen Verfahrens 1-13 ist der Raps in einem hohen Mass verwertbar. So lassen sich z.B. aus einer Rapssaat von 300'000 t (Input 1.1), 9'200 t Methanol (Input 5.3) und 4'900 t von weiteren Edukten (Input 5.4) sowie 103'000 t Holz (Input 12.2) u.a. folgende Produkte gewinnen:
- 92'800 t Rapsmethylester, was 103 Millionen Liter Biodiesel entspricht (Output 6.1)
- 6'000 t Fett- und Aminosäuren, Lecithin, etc. (Output 8.1)
- 54'400 t Proteinisolate (Output 9.1)
- 150 GWh Strom (Output 7.1, 13.1 und 13.4)
- 317 GWh Wärme (Output 7.2, 13.2 und 13.5)
- 16'000 t Schalenöl, was 17.8 Millionen Liter Schalenöl entspricht (Output 10.2)
- 16'000 t Wasser (Output 5.2 und 11.2).

Die Verluste betragen dabei 290 GWh (Output 7.3, 13.3 und 13.6). Etwa 14'800 t sind Reststoffe (Output 8.2 und 9.2).

Das erfindungsgemässe Verfahren lässt sich generell auf Ölpflanzen wie Raps, Soja, Ölpalme, Jatropha, Lein, Leindotter, Sonnenblume oder andere ölhaltige Pflanzen anwenden, um sie auf möglichst vollständige Weise stofflich sowie energetisch zu verwerten.

Das erfindungsgemässe Verfahren hat u.a. den Vorteil, dass durch die verbesserte Verwertung der Ölpflanzen die für eines einzelnen Produkts an sich ungünstige Ökobilanz deutlich verbessert wird. Soll beispielsweise Biokraftstoff hergestellt werden, so stellt die stoffliche und energetische Nutzung der bei der Ölgewinnung anfallenden Pflanzinhaltsstoffe in der Summe eine Ertragsquelle dar, die vergleichbar ist mit jener des Biokraftstoffes.

Das Verfahren basiert auf einem integrierten Konzept, welches die drei Prozesse Ölgewinnung, Proteingewinnung und energetische Verwertung in nachhaltiger Weise miteinander verknüpft:
- Bei einer Biokraftstoffproduktion wird die ökologische Belastung deutlich gesenkt.
- Die nachhaltige Nutzung der begrenzten Ressourcen wird optimiert.
- Die weitergehende stoffliche und energetische Nutzung erhöht wesentlich die Wertschöpfung.

Aus der vorangehenden Beschreibung sind dem Fachmann zahlreiche Abwandlungen zugänglich, ohne den Schutzbereich der Erfindung zu verlassen, der durch die Ansprüche definiert ist.

So ist es z.B. denkbar, das gewonnene Öl in anderer Weise weiterzuverarbeiten, beispielsweise zu Biobrennstoff, Speiseöl, etc., indem die Verfahrensschritte zur Weiterverarbeitung in geeigneter Weise ausgelegt werden.

Es ist nicht erforderlich, die einzelnen Verfahrensschritte 1-13 vollständig durchzuführen. Je nach Auslegung ist eine teilweise und/oder überwiegende Durchführung eines Verfahrensschritts ausreichend.

Im Weiteren braucht das Verfahren nicht unbedingt in einer Anlage durchgeführt werden, die sich an einem einzigen Ort befindet. Es ist möglich, einzelne Verfahrensschritte in örtlich getrennten Anlagen durchzuführen, die sich unter Umständen in unterschiedlichen Ortschaften befinden.

## Patentansprüche

1. Verfahren zur Verwertung von Ölpflanzen, aus welchen Öl gewonnen wird und welche eine Saat mit Saatkörpern und diese umgebenden Saatschalen aufweisen, wobei
aus den restlichen, bei der Ölgewinnung anfallenden (3) Pflanzeninhaltsstoffen die Saatschalen zumindest teilweise entfernt sind,
aus diesen restlichen Pflanzeninhaltsstoffen zumindest teilweise die Proteine gewonnen werden (9) und
die entproteinisierten Pflanzeninhaltsstoffe zumindest teilweise aufbereitet werden (11, 12), um sie energetisch zu verwerten (13a, 13b), insbesondere zur Erzeugung von Strom und/oder nutzbarer Wärme.

2. Verfahren nach Anspruch 1, wobei die entproteinisierten Pflanzeninhaltsstoffe zu Presskörpern, insbesondere Pellets verdichtet werden (11), die der energetischen Verwertung zuführbar sind (13a, 13b).

3. Verfahren nach einem der vorangehenden Ansprüche, wobei die Saatschalen überwiegend aus den restlichen Pflanzeninhaltsstoffen entfernt sind, aus denen die Proteine gewonnen werden (9).

4. Verfahren nach einen der vorangehenden Ansprüche, wobei die Saatkörper und Saatschalen zumindest teilweise und vorzugsweise überwiegend voneinander getrennt werden und/oder sind (2), bevor das Öl gewonnen wird.

5. Verfahren nach Anspruch 4, wobei die Saatkörper gepresst werden (3) zur Gewinnung des Öls und der Pressrückstand die restlichen Pflanzeninhaltsstoffe bildet.

6. Verfahren nach Anspruch 4 oder 5, wobei beim Trennen (2) bzw. Pressen (3) die Temperatur der Saatkörper einen Maximalwert nicht überschreitet, der 100 Grad Celsius, vorzugsweise 80 Grad Celsius und besonders bevorzugt 65 Grad Celsius beträgt.

7. Verfahren nach einem der Ansprüche 1 bis 6, wobei die Saatschalen gepresst werden (10), um das darin enthaltene Öl zu gewinnen, und die entproteinisierten Pflanzeninhaltsstoffe zusammen mit dem Pressrückstand der Saatschalen zur energetischen Verwertung (13a, 13b) aufbereitet werden (11, 12).

8. Verfahren nach einem der vorangehenden Ansprüche, wobei die aus den Pflanzeninhaltsstoffen gewonnenen Proteine (9) in Lebensmitteln verwendbar sind und/oder verwendet werden.

9. Verfahren nach einem der vorangehenden Ansprüche, wobei die aus den Pflanzeninhaltsstoffen gewonnenen Proteine (9) in Futtermitteln verwendbar sind und/oder verwendet werden.

10. Verfahren nach einem der vorangehenden Ansprüche, wobei aus dem Öl zumindest teilweise Biokraftstoff, Biobrennstoff (4-6) und/oder Speiseöl hergestellt wird.

11. Verfahren nach einem der vorangehenden Ansprüche, wobei die aufbereiteten Pflanzeninhaltsstoffe energetisch durch Verbrennung verwertet werden (13a, 13b).

12. Verfahren nach einem der vorangehenden Ansprüche, wobei die energetische Verwertung (13a, 13b) in einer Wärme-Kraft-Kopplungsanlage erfolgt.

13. Verfahren nach einem der vorangehenden Ansprüche, wobei das aus den Ölpflanzen gewonnene Öl verestert wird (6) und das dabei anfallende Glycerin energetisch verwertet wird (7a, 7b), insbesondere zur Erzeugung von Strom und/oder nutzbarer Wärme.

14. Verfahren nach einem der vorangehenden Ansprüche, wobei die Ölpflanzen Raps, Soja, Ölpalme, Jatropha, Lein, Leindotter und/oder Sonnenblume enthalten.

15. Gesamtanlage zur Verwertung von Ölpflanzen, die eine Saat mit Saatkörpern und diese umgebenden Saatschalen aufweisen, wobei die Gesamtanlage eingerichtet ist zum Durchführen des Verfahrens nach einem der vorangehenden Ansprüche und folgende Anlagen aufweist:
- eine Anlage zum Trennen von Saatkörpern und Saatschalen,
- eine Anlage zur Ölgewinnung aus der Saat,
- eine Anlage zur Proteingewinnung aus den bei der Ölgewinnung anfallenden Pflanzenhinhaltsstoffen,
- eine Anlage zur Aufbereitung der entproteinisierten Pflanzeninhaltsstoffe, um sie energetisch zu verwerten, insbesondere eine Anlage zur Verdichtung der entproteinisierten Pflanzeninhaltsstoffe zu Presskörpern.

16. Gesamtanlage nach Anspruch 15, welche weiter eine Anlage zur energetischen Verwertung der aufbereiteten Pflanzeninhaltsstoffe aufweist.

## Claims

1. Method for utilising oil plants from which oil is extracted and which have seeds comprising seed bodies and seed hulls surrounding the latter, wherein
the seed hulls are at least partly removed from the residual plant substances arising (3) in the oil extraction,
the proteins are at least partly extracted (9) from these residual plant substances, and
the deproteinised plant substances are at least partly conditioned (11, 12) in order to be utilised energetically (13a, 13b), more particularly for producing electricity and/or usable heat.

2. Method according to claim 1, wherein the deproteinised plant substances are compacted (11) into compacts, more particularly pellets, that are utilisable energetically (13a, 13b).

3. Method according to one of the preceding claims, wherein the seed hulls are mostly removed from the residual plant substances from which the proteins are extracted (9).

4. Method according to one of the preceding claims, wherein the seed bodies and the seed hulls are and/or have been at least partly and preferably mostly separated (2) from each other before the oil is extracted.

5. Method according to claim 4, wherein the seed bodies are pressed (3) in order to extract the oil and the pressed residue constitutes the residual plant substances.

6. Method according to claim 4 or 5, wherein during their separation (2) or during the pressing operation (3), respectively, the temperature of the seed bodies does not exceed a maximum value that is equal to 100 degrees Celsius, preferably 80 degrees Celsius and particularly preferably 65 degrees Celsius.

7. Method according to one of claims 1 to 6, wherein the seed hulls are pressed (10) in order to extract the oil contained therein and the deproteinised plant substances are conditioned (11, 12) together with the pressed residue of the seed hulls for being utilised energetically (13a, 13b).

8. Method according to one of the preceding claims, wherein the proteins (9) extracted from the plant substances are used and/or suitable for use in foods.

9. Method according to one of the preceding claims, wherein the proteins (9) extracted from the plant substances are used and/or suitable for use in feedstuffs.

10. Method according to one of the preceding claims, wherein the oil is at least partly used for producing biodiesel, biofuel (4-6) and/or edible oil.

11. Method according to one of the preceding claims, wherein the conditioned plant substances are energetically utilised by combustion (13a, 13b).

12. Method according to one of the preceding claims, wherein the energetic utilisation (13a, 13b) is carried out in a combined heat and power plant.

13. Method according to one of the preceding claims, wherein the oil extracted from the oil plants is esterified (6) and the glycerine arising in the process is utilised energetically (7a, 7b), more particularly for producing electricity and/or usable heat.

14. Method according to one of the preceding claims, wherein the oil plants include rapeseed, soy, oil palm, jatropha, flax, false flax, and/or sunflower.

15. Complete system for the utilisation of oil plants which have seeds comprising seed bodies and seed hulls surrounding the latter, wherein the complete system is arranged to carry out the method according to one of the preceding claims and includes the following installations:
- an installation for separating seed bodies and seed hulls,
- an installation for oil extraction from the seeds,
- an installation for protein extraction from the plant substances arising in the oil extraction,
- an installation for conditioning the deproteinised plant substances for their energetic utilisation, more particularly an installation for compacting the deproteinised plant substances into compacts.

16. Complete system according to claim 15, further comprising an installation for the energetic utilisation of the conditioned plant substances.

## Revendications

1. Procédé d'utilisation d'oléagineux desquels est extraite de l'huile et dont la semence comprend des corps de semence et des enveloppes de semence, où
les enveloppes de semence sont au moins partiellement séparées des substances végétales résiduelles dérivant (3) de l'extraction de l'huile,
les protéines sont au moins partiellement extraites (9) de ces substances végétales résiduelles et
les substances végétales déprotéinées sont conditionnées (11, 12) au moins partiellement afin de les utiliser énergétiquement (13a, 13b), plus particulièrement pour produire de l'électricité et/ou de la chaleur utile.

2. Procédé selon la revendication 1, où les substances végétales déprotéinées sont compactés (11) en des corps comprimés, plus particulièrement en pellets, pouvant être amenés à l'utilisation énergétique (13a, 13b).

3. Procédé selon l'une des revendications précédentes, où les enveloppes de semence sont majoritairement séparées des substances végétales résiduelles desquelles sont extraites (9) les protéines.

4. Procédé selon l'une des revendications précédentes, où les corps de semence et les enveloppes de semence sont et/ou ont été séparés (2) les uns des autres au moins partiellement et préférablement majoritairement avant l'extraction de l'huile.

5. Procédé selon la revendication 4, où les corps de semence sont pressés (3) afin d'en extraire l'huile et le résidu de pressage constitue les substances végétales résiduelles.

6. Procédé selon la revendication 4 ou 5, où lors de la séparation (2) resp. lors du pressage (3); la température des corps de semence ne dépasse pas une valeur maximale qui est égale à 100 degrés Celsius, préférablement à 80 degrés Celsius et particulièrement préférablement à 65 degrés Celsius.

7. Procédé selon l'une des revendications 1 à 6, où les enveloppes de semence sont pressées (10) afin d'en extraire l'huile qu'elles contiennent, et les substances végétales déprotéinées sont conditionnées (11, 12) avec le résidu de pressage des enveloppes de semence pour leur utilisation énergétique (13a, 13b).

8. Procédé selon l'une des revendications précédentes, où les protéines (9) extraites des substances végétales sont utilisables et/ou utilisées dans des aliments.

9. Procédé selon l'une des revendications précédentes, où les protéines (9) extraites des substances végétales sont utilisables et/ou utilisées dans des fourrages.

10. Procédé selon l'une des revendications précédentes, où l'huile est au moins partiellement utilisée pour produire du biocarburant, du biocombustible (4-6) et/ou de l'huile alimentaire.

11. Procédé selon l'une des revendications précédentes, où les substances végétales conditionnées sont énergétiquement utilisées par combustion (13a, 13b).

12. Procédé selon l'une des revendications précédentes, où l'utilisation énergétique (13a, 13b) est mise en oeuvre dans une centrale de cogénération chaleur-force.

13. Procédé selon l'une des revendications précédentes, où l'huile extraite des oléagineux est estérifiée (6) et la glycérine produite est énergétiquement utilisée (7a, 7b), plus particulièrement pour produire de l'électricité et/ou de la chaleur utile.

14. Procédé selon l'une des revendications précédentes, où les oléagineux comprennent le colza, le soja, le palmier à huile, le jatropha, le lin, la cameline et/ou le tournesol.

15. Installation complète d'utilisation d'oléagineux dont la semence comprend des corps de semence et des enveloppes de semence, où l'installation complète est aménagée pour mettre en oeuvre le procédé selon l'une des revendications précédentes et comprend les installations suivantes:
- une installation de séparation des corps de semence et des enveloppes de semence,
- une installation d'extraction d'huile de la semence,
- une installation d'extraction de protéines des substances végétales dérivant de l'extraction de l'huile,
- une installation de conditionnement des substances végétales déprotéinées afin de les utiliser énergétiquement, plus particulièrement une installation de compactage des substances végétales déprotéinées en corps comprimés.

16. Installation complète selon la 15, laquelle comprend en plus une installation d'utilisation énergétique des substances végétales conditionnées.
